# EUROPEAN PATENT SPECIFICATION

(11) **EP 1 852 298 B1**
(45) Date of publication and mention of the grant of the patent: **28.01.2009**
(21) Application number: 06075974.3
(22) Date of filing: 01.05.2006
(51) Int. Cl.: B60K 15/04

(54) **Motor vehicle having a fuel filler assembly**
Kraftfahrzeug mit einem Kraftstoff-Einfüllstutzen
Véhicule automobile avec une goulotte de remplissage d'essence

(43) Date of publication of application: 07.11.2007
(73) Proprietor: Ford Global Technologies, LLC, Dearborn, MI 48126 (US); Ford Otomotiv Sanyi Anonim Sirketi, Istanbul (TR)
(72) Inventor: Kilic, Namic, Yahyakaptan Kocaeli (TR); Erdener, Mustafa, 34734 Istanbul (TR); Yegenoglu, Bulent, 40310 Kocaeli (TR); Cetin, Emre, Degirmendere-Golcuk 41670 Kocaeli (TR); Yildizcelik, Ilker, 41050 Yahyakaptan Izmit/Kocaeli (TR)
(74) Representative: Grunfeld, David Peter

(56) References cited:
- DE-A1- 19 816 038
- JP-A- 11 321 350
- JP-A- 2006 103 445

## Description

This invention relates to motor vehicles and in particular to a fuel filler assembly having improved crash performance.

The documents JP 2006103445, JP 11321350 and DE 19816038 show motor vehicles of this type.

It is well known to connect a lower end of an elongate fuel filler pipe to a fuel reservoir such as a fuel tank of a motor vehicle. The fuel filler pipe has a mouth at an upper end into which a nozzle of a fuel dispensing apparatus can be inserted in order to fill or refill the fuel tank with fuel.

In many vehicles the fuel reservoir or fuel tank is mounted near to a rear end of the motor vehicle and so the fuel tank and in particular the fuel filler pipe are vulnerable to damage if the motor vehicle is hit from the rear during an accident. Such an accident is often referred to as a 'rear impact'.

In particular, damage to the rear structure of the motor vehicle can cause the failure of brackets securing the fuel filler pipe to the vehicle allowing the filler pipe to be deformed in such a manner as to cause failure of the fuel filler pipe or of the connection of the fuel filler pipe to the fuel tank and in some cases deformed parts of the body structure may cut or penetrate the fuel filler pipe.

Any failure of the fuel filler pipe or its connection to the fuel tank is undesirable because it may result in fuel leakage from the fuel tank with a consequent risk of a fire developing.

It is an object of this invention to provide a motor vehicle having a fuel filler assembly that is less likely to be damaged in the event of a rear impact.

According to the invention there is provided motor vehicle having a body structure and a fuel filler assembly attached to the body structure, the fuel filler assembly comprising an elongate rigid fuel filler pipe, a flexible fuel hose to connect a lower end of the fuel filler pipe to a fuel reservoir of the motor vehicle and first and second brackets to attach the fuel filler pipe to the structure of the motor vehicle, the fuel filler pipe has an upper end defining a mouth into which fuel from a fuel dispensing apparatus is poured in order to fill or refill the fuel reservoir with fuel, a first section extending rearwardly from the lower end and a second section extending substantially downwardly from the upper end to a position where it joins the first section characterised in that the first section extends rearwardly from the lower end along a substantially fore-aft longitudinal axis, the first bracket is a guiding bracket used to slidingly attach the first section to part of the structure of the motor vehicle, the second bracket is a sweeper bracket assembly to attach the fuel filler pipe to part of the body structure of the motor vehicle at a position located to the rear of the guiding bracket and that the part of the body structure located between the guiding bracket and the sweeper bracket assembly is designed to deform when a force above a predetermined level is applied to a rear end of the motor vehicle thereby causing the first portion of fuel filler pipe to be slid forwardly along its longitudinal axis by the sweeper bracket assembly.

This has the advantage that a small rear impact upon the motor vehicle will only cause the flexible fuel hose to be deformed or buckled, the fuel filler pipe will remain undamaged and in particular because the fuel filler pipe is free to slide forwards very little load is applied to the first and second brackets and these also remain undamaged.

The sweeper bracket assembly may comprise an outer hook shaped member for urging the first portion of the fuel filler pipe in a forward direction and an inner bracket member attached to the outer hook shaped member to hold the fuel filler pipe to the outer hook shaped member during normal use.

The inner bracket member may be attached to the outer hook shaped member by an attachment means designed to break when a pre-determined force is applied to it.

A stop may be provided on the first section for engagement with the guiding bracket to limit forward movement of the first section.

Further deformation of the body structure after the stop on the first section has contacted the guiding bracket may cause the fuel filler pipe to break the attachment means and deform the outer bracket member.

The deformation of the outer bracket member may cause the outer bracket member to be straightened thereby releasing the fuel filler pipe.

The fuel filler assembly may further comprise an upper bracket to attach the second section of the fuel filler pipe to the body structure of the motor vehicle at a position towards the upper end.

The flexible fuel hose may follow a non-linear path between the fuel reservoir and the rigid fuel filler pipe.

This has the advantage that the flexible hose is easier to deform or buckle when an end load is applied to it

The motor vehicle may have a longitudinal axis and the longitudinal axis of the first section of the fuel filler pipe may be arranged to lie parallel to the longitudinal axis of the motor vehicle.

The invention will now be described by way of example with reference to the accompanying drawing of which:-
Fig.1 shows a pictorial representation of part of the rear body structure and a fuel filler assembly of a motor vehicle according to the invention;
Fig.2 is a pictorial representation similar to that shown in Fig.1 but with the body structure removed;
Fig.3 is an underside view of the motor vehicle shown in Fig.1;
Fig.4a is an enlarged side view of a guiding bracket forming part of the fuel filler assembly shown in Figs.1 to 3 as viewed from a centre-line of the motor vehicle;
Fig.4b is a pictorial representation of a bush for use in a guiding bracket of the type shown in Fig.4a according to an alternative embodiment;
Fig.5 is a side view of a sweeper bracket assembly forming part of the fuel filler assembly shown in Figs. 1 to 3;
Fig.6 is an end view in the direction of arrow 'X*'* on Fig.5 of the sweeper bracket assembly; and
Fig.7 is a scrap view of an alternative flexible fuel hose for use in a fuel filler assembly according to the invention.

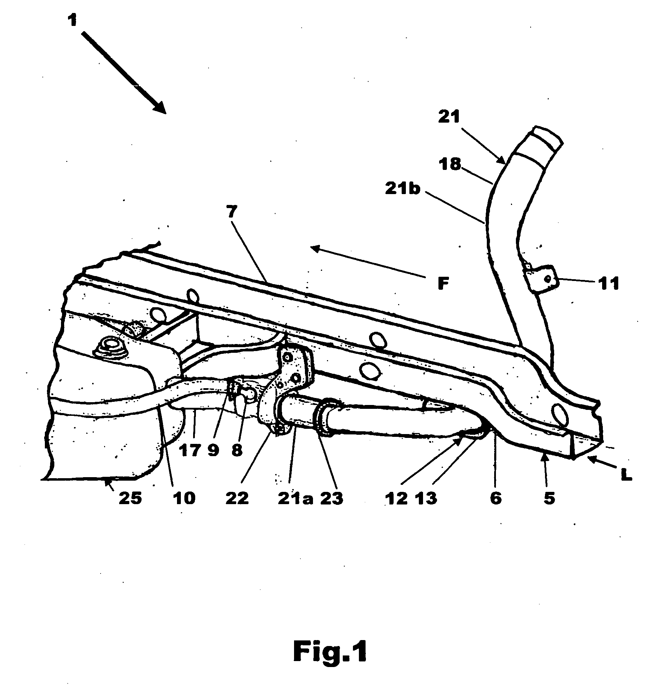

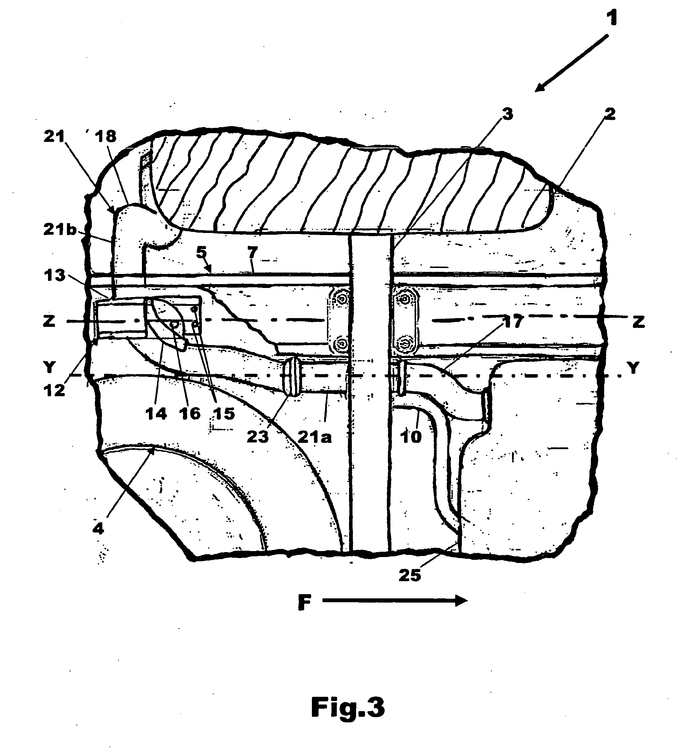

With reference to Fig.3 there is shown the right hand rear quarter of a motor vehicle 1 having a right hand rear wheel 2 a beam axle 3 to connect the right hand rear wheel 2 to a left hand side rear wheel (not shown) a spare wheel 4, a side rail 5 forming part of a body structure of the motor vehicle 1, a fuel reservoir in the form of a fuel tank 25 and a fuel filler assembly for use in filling the fuel tank 25. The arrow 'F' shown on Figs. 1 to 3 points to the front of the motor vehicle 1.

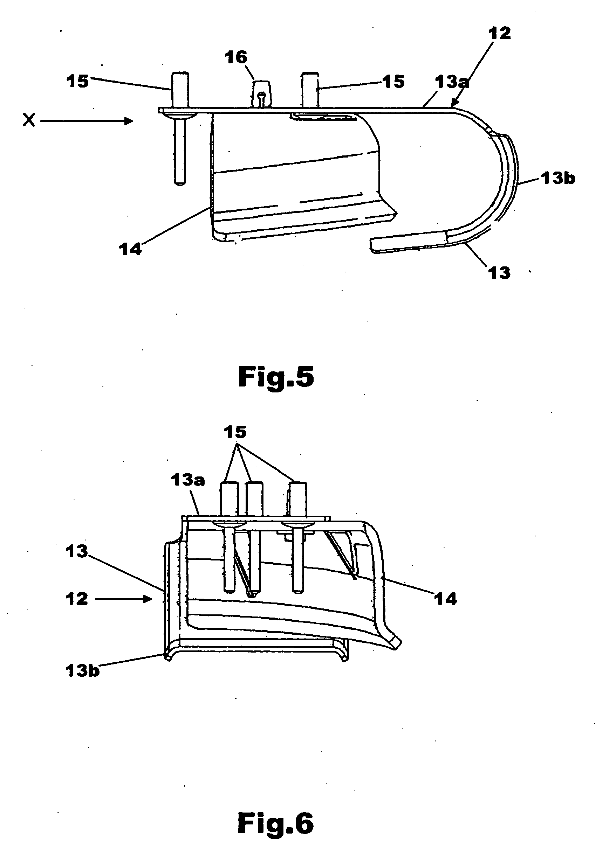

Referring now to Figs. 1 to 6, the fuel filler assembly comprises of elongate rigid fuel filler pipe 21, a flexible fuel hose 17 to connect a lower end of the fuel filler pipe 21 to the fuel tank 25 and first, second and third brackets 22, 12 and 11 to attach the fuel filler pipe 21 to the body structure of the motor vehicle.

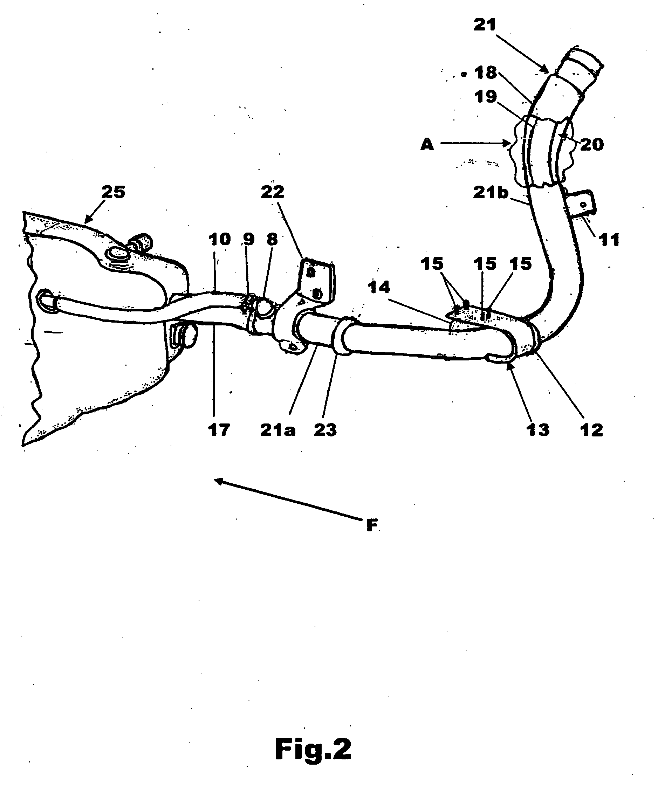

The fuel filler pipe 21 has a first section 21a extending rearwardly from the lower end and a second section 21b extending substantially downwardly from an upper end of the fuel filler pipe 21 to a position where it joins the first section 21a. The upper end of the fuel filler pipe 21 defines a mouth into which fuel from a fuel dispensing apparatus (not shown) is poured in order to fill or refill the fuel tank 25 with fuel. The fuel filler pipe 21 is in this case formed by inner and outer plastic pipes 19, 18 as can be seen in the cutaway area 'A' on Fig.2 but it will be appreciated that the invention is not limited to such an arrangement and is equally applicable to a single fuel filler pipe arrangement. The advantage of use two fuel filler pipes 18, 19 is that it is possible to form a vent passage 20 between the two pipes 18, 19 thereby eliminating the need for a separate vent tube which takes up more space and can be easily damaged in a crash. This twin pipe arrangement is further advantageous in that the outer pipe 18 is able to reduce the risk of the inner pipe 19, which is connected to the fuel tank 25 by the flexible hose 17, from being damaged during a rear impact or, if the inner tube 18 is fractured, prevent the loss of any fuel that may be in the inner pipe 19 from escaping. In the preferred embodiment shown the inner pipe 19 is extruded from a tough resilient rigid plastic and the outer pipe 18 is blow moulded from a tough resilient rigid plastic such as HDPE.

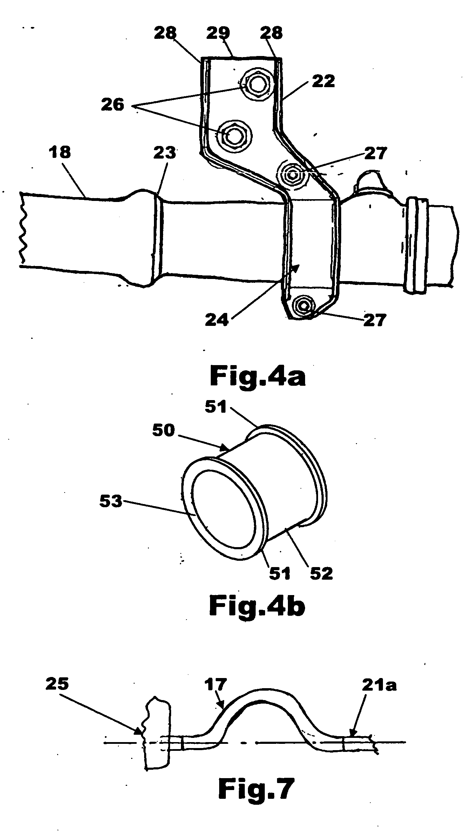

The flexible hose 17 follows a non-linear path from the lower end of the fuel filler pipe 21 to the fuel tank 25 in order to ensure that the flexible hose 17 is easily deformed when an end load is applied to it. In the example shown in Figs.1 to 3 the two ends of the flexible pipe 17 do not fall on a common axis and so any load applied to the flexible hose 17 from the fuel filler pipe 21 is offset relative to its position of connection to the fuel tank 25. An alternative form of non-linear path is shown and described hereinafter with respect to Fig.7

The vent passage 20 is connected to an upper end of the fuel tank 25 by flexible pipe 10. A connector elbow 8 fitted to the lower end of the fuel filler pipe 21 is used to connect the vent passage 20 to the flexible vent pipe 10 which is held onto the elbow 8 by a pipe clip 9.

The first section 21a of the fuel filler pipe 21 extends rearwardly from the lower end along a substantially fore-aft longitudinal axis Y-Y (Fig.3) which is in this case arranged parallel to a longitudinal axis Z-Z (Fig.3) of the motor vehicle 1. In this case the side rail 5 also runs in a substantially fore-aft direction but this need not be the case. The side rail 5 has a deformable portion located in front of a joggle bend 6 which is provided to produce a bending effect in the deformable portion 7 when a load 'L' (see Fig.1) is applied to a rear end of the side rail 5 by a rear impact to the motor vehicle 1. This bending effect assists the collapse of the deformable portion 7 and more importantly ensures that the deformable portion 7 collapses in a predictable manner to absorb energy when a predetermined force from a rear impact is applied to the side rail 5. The portion of the side rail 5 to the rear of the joggled bend 6 is very rigid as it is relatively short in length and is connected directly to a rigid rear cross member (not shown) of the motor vehicle.

The first section 21a is slidingly supported by the first bracket in the form of a guiding bracket 22 which is attached to the body structure of the motor vehicle 1 by two threaded fasteners 26. The sliding bracket comprises of first and second bracket members 28, 29 fastened together by threaded fasteners 27 to form a cylindrical passage 24 therebetween into which is fitted the first section 21a of the fuel filler pipe 21. The first bracket member 28 has upturned edges which are visible on Fig.4 to increase the strength of the guiding bracket 22. The second bracket member 29 is fitted within a trough formed by the upturned edges of the first bracket member 28. Two further threaded fasteners 26 are used to attach the guiding bracket 22 to the body structure of the motor vehicle 1. The diameter of the cylindrical passage 24 is such that it loosely holds the first section 21a to prevent rattling but does not hold the first section 21a tight so that the first section 21a is easily slid through the guiding bracket if a load is applied along its fore-aft axis Y-Y. The fasteners 27 are used to adjust the clamping force of the guiding bracket 22 on the fuel filler pipe 21. The diameter of the first section 21a gradually decreases away from the first end so that as the first section 21a is moved forwardly the clearance between the first section 21a and the guiding bracket 22 will increase.

An alternative to this construction of guiding bracket can use a bush that is rigidly clamped by the guiding bracket 22 and has a bore through which the fuel filler pipe 21 can slide. Such a bush 50 is shown in Fig.4b which has a cylindrical bore 53 sized to form a sliding fit with the first section 21a or more specifically with the outer fuel filler pipe 18. The bush 50 has a cylindrical central outer portion 52 which is clamped by the guiding bracket 22 and two end flanges 51 which engage with edges of the guiding bracket 22 to prevent the bush 50 from being displaced from the guiding bracket 22 when the fuel filler pipe is slid through the bush 50. An advantage of this construction is that it is possible to use a similar plastic material for the bush and the outer fuel filler pipe 18 and so variations in fit due to thermal expansion are avoided. In addition, the use of a plastic bush 50 would have an improved sliding relationship with the outer fuel filler pipe 18 and because it could be injection moulded could be made with tighter tolerances thereby improving the fit and reducing the risk of rattling.

A travel stop 23 is formed as an integral part of the first section 21a or to be more precise as part of the outer pipe 18. The stop 23 is positioned so that when the first section 21a slides forward it cannot come into contact with the fuel tank 25 and also prevents too great a load being transferred to the flexible hose 17 or to its fixings to the fuel tank 25 or fuel filler pipe 21 which could cause a failure of these parts.

The second bracket in the form of a sweeper bracket assembly 12 comprises of a hook shaped metal outer bracket member 13 and a plastic inner bracket member 14 which is attached to the outer bracket member 13 by a breakable attachment means in the form of a snap-in fastener 16. The outer bracket member 13 is fastened to the side rail 5 at a position just in front of the joggled bend 6 by four rivets 15.

The outer bracket member 13 has a flat portion 13a which is attached to the side rail 5 by the rivets 15 and a hook shaped end portion 13b. The edges of the hook shaped end portion 13b are bent up to increase its local stiffness. The actual stiffness of the outer bracket member 13 is very important to the functioning of the design as this component is intended to be deformed during a rear impact. The stiffness of the outer bracket member 13 is therefore designed to be sufficiently stiff to maintain the fuel filler pipe 21 in position during normal use but not so stiff that it cannot be deformed when required during a rear impact.

The inner bracket member 14 is hot plate welded to an inner curvature of the outer pipe 18 at a position where the direction of the second section 21b changes from substantially downwardly to substantially forwardly with respect to the upper end of the fuel filler pipe 21. The inner bracket member 14 is used to hold the second section 21b to the outer bracket member 13 during normal use of the motor vehicle 1.

The third or upper bracket 11 is used to attach the second section 21b of the fuel filler pipe 21 to the body structure of the motor vehicle at a position towards the upper end of the fuel filler pipe 21.

In the event of a rear impact upon the motor vehicle 1 of sufficient severity to cause deformation of the deformable portion 7 of the side rail 5, the sweeper bracket assembly 12 is moved forwardly by the collapsing side rail 5. The first effect of this is to cause the first section 21a of the fuel filler pipe 21 to slide through the guiding bracket 22 along its fore-aft axis Y-Y causing the flexible hose 17 to be deformed.

This forward sliding motion of the first section 21a will continue until the stop 23 contacts the guiding bracket 22. The guiding bracket 22 is very rigid and is able to resist any further forward sliding motion of the first section 21a. The contact between the stop 23 and the guiding bracket 22 causes a force to be generated in the first section 21a if the sweeper bracket 12 is moved further forward. The force generated in the first section 21a reacts against the sweeper bracket assembly 12 and will cause the snap-in fastener 16 to fail when it reaches a predetermined level thereby releasing the fuel filler pipe 21 from the sweeper bracket assembly 12. However, due to the load being applied to the outer bracket member 13 of the sweeper bracket assembly 12, the fuel filler pipe 21 remains engaged with the hook shaped end portion 13b. Further forward motion of the sweeper bracket assembly 12 due to continuing collapse of the deformable portion 7 of the side rail 5 will cause the fuel filler pipe 21 to deform the outer bracket member 13 so as to return it to an almost flat shape and at the same time the fuel filler pipe 21 bends downwardly between the stop 23 and the sweeper bracket assembly 12 in a controlled manner and bends forwardly between the sweeper bracket assembly 12 and the upper bracket 11 in a controlled manner. That is to say, the arrangement of the brackets 11, 12 and 22 ensures that the bending of the fuel filler pipe 21 is not about a small radius so as to ensure that the fuel filler pipe 21 is not ruptured due to the bending.

By the time the outer bracket member 13 has been deformed to a substantially flat state the impact force will have been absorbed by the deformable portion 7 of the side rail 5 and the fuel filler pipe 21 although considerably distorted is still intact and remains held to the motor vehicle 1 by the guiding bracket 22 and the upper bracket 11.

A fuel filler assembly according to this invention has improved crash performance during a rear impact upon the motor vehicle due to its novel construction and the arrangement of the brackets used to attach it to the motor vehicle 1.

With reference to Fig.7 there is shown an alternative arrangement of flexible filler hose 17 in which one end is connected to the fuel tank 25 and the other end is attached to the first section 21a of the fuel filler pipe. In this case the two ends lie on the same axis but the path of the flexible fuel hose is non-linear as it follows a curved path. This ensures that the flexible fuel hose 17 will collapse or buckle easily when subjected to an end load from the first section 21a thereby reducing the back load upon the fuel filler pipe 21 and allow it to slide easily through the guiding bracket.

Although the invention has been described with respect to a specific body structure it will be appreciated that it can be applied to other body structures. The primary elements of the invention are the use of a forward sliding support for a fuel filler pipe and a second support which is attached to the motor vehicle at a position to the rear of the sliding support such that deformation of the motor vehicle between the two supports causes sliding of the fuel filler pipe which is able to accommodate considerable rear deformation of the motor vehicle before any significant deformation to the fuel filler pipe occurs. That is to say, for low energy rear impacts, the only change to the fuel filler pipe is that it will have been pushed forward at its lower end towards the front of the motor vehicle and the flexible hose will have been deformed. When larger energy impact are applied to the motor vehicle the fuel filler pipe is then gradually and controllably deformed in such a manner as to reduce the risk of failure and remains attached to the motor vehicle at all times.

It will be appreciated by those skilled in the art that although the invention has been described by way of example with reference to one or more embodiments it is not limited to the disclosed embodiments and that one or more modifications to the disclosed embodiments or alternative embodiments could be constructed without departing from the scope of the invention as defined by the appended claims.

## Claims

1. A motor vehicle (1) having a body structure and a fuel filler assembly attached to the body structure, the fuel filler assembly comprising an elongate rigid fuel filler pipe (21), a flexible fuel hose (17) to connect a lower end of the fuel filler pipe (21) to a fuel reservoir (25) of the motor vehicle (1) and first and second brackets (22, 12) to attach the fuel filler pipe (21) to the structure of the motor vehicle (1), the fuel filler pipe (21) has an upper end defining a mouth into which fuel from a fuel dispensing apparatus is poured in order to fill or refill the fuel reservoir with fuel, a first section (21a) extending rearwardly from the lower end and a second section (21b) extending substantially downwardly from the upper end to a position where it joins the first section (21a) **characterised in that** the first section (21a) extends rearwardly from the lower end along a substantially fore-aft longitudinal axis (Y-Y), the first bracket is a guiding bracket (22) used to slidingly attach the first section (21a) to part of the structure of the motor vehicle (1), the second bracket is a sweeper bracket assembly (12) to attach the fuel filler pipe (21) to part of the body structure of the motor vehicle (1) at a position located to the rear of the guiding bracket (22) and that the part of the body structure (7) located between the guiding bracket(22) and the sweeper bracket assembly (12) is designed to deform when a force above a predetermined level is applied to a rear end of the motor vehicle (1) thereby causing the first portion (21a) of fuel filler pipe (21) to be slid forwardly along its longitudinal axis by the sweeper bracket assembly (12).

2. A motor vehicle as claimed in claim 1 wherein the sweeper bracket assembly (12) comprises of an outer hook shaped member (13) for urging the first portion (21a) of the fuel filler pipe (21) in a forward direction and an inner bracket member (14) attached to the outer hook shaped member (13) to hold the fuel filler pipe (21) to the outer hook shaped member (13) during normal use.

3. A motor vehicle as claimed in claim 2 wherein the inner bracket member (14) is attached to the outer hook shaped member (13) by an attachment means (16) designed to break when a pre-determined force is applied to it.

4. A motor vehicle as claimed in any of claims 1 to 3 wherein a stop (23) is provided on the first section (21a) for engagement with the guiding bracket (22) to limit forward movement of the first section (21a).

5. A motor vehicle as claimed in claim 4 when dependent upon claim 2 or upon claim 3 wherein further deformation of the body structure after the stop (23) on the first section (21a) has contacted the guiding bracket (22) causes the fuel filler pipe (21) to break the attachment means (16) and deform the outer bracket member (13).

6. A motor vehicle as claimed in claim 6 wherein the deformation of the outer bracket member (13) causes the outer bracket member (13) to be straightened thereby releasing the fuel filler pipe (21).

7. A motor vehicle as claimed in any of claims 1 to 6 wherein the fuel filler assembly further comprises an upper bracket (11) to attach the second section (21b) of the fuel filler pipe (21) to the body structure of the motor vehicle at a position towards the upper end.

8. A motor vehicle as claimed in any of claims 1 to 7 wherein the flexible fuel hose (17) follows a non-linear path between the fuel reservoir (25) and the rigid fuel filler pipe (21).

9. A motor vehicle as claimed in any of claims 1 to 8 wherein the motor vehicle (1) has a longitudinal axis (Z-Z) and the longitudinal axis (Y-Y) of the first section (21a) of the fuel filler pipe (21) is arranged to lie parallel to the longitudinal axis (Z-Z) of the motor vehicle (1).

## Patentansprüche

1. Kraftfahrzeug (1) mit einer Karosseriestruktur und einer an der Karosseriestruktur befestigten Kraftstoff-Einfüllstutzenanordnung, wobei die Kraftstoff-Einfüllstutzenanordnung ein längliches, starres Kraftstoff-Einfüllrohr (21), einen flexiblen Kraftstoffschlauch (17) zur Verbindung eines unteren Endes des Kraftstoff-Einfüllrohrs (21) mit einem Kraftstoffbehälter (25) des Kraftfahrzeugs (1) und einen ersten und zweiten Halter (22, 12) zur Befestigung des Kraftstoff-Einfüllrohrs (21) an der Struktur des Kraftfahrzeugs (1) umfasst, wobei das Kraftstoff-Einfüllrohr (21) ein oberes Ende, das eine Mündung definiert, in die Kraftstoff von einer Kraftstoffabgabevorrichtung gefüllt wird, um den Kraftstoffbehälter mit Kraftstoff zu füllen oder nachzufüllen, einen ersten Abschnitt (21a), der sich von dem unteren Ende nach hinten erstreckt, und einen zweiten Abschnitt (21b), der sich von dem oberen Ende im Wesentlichen abwärts zu einer Stelle erstreckt, an der er auf den ersten Abschnitt (21a) trifft, aufweist, **dadurch gekennzeichnet, dass** sich der erste Abschnitt (21a) von dem unteren Ende entlang einer im Wesentlichen längs verlaufenden Längsachse (Y-Y) nach hinten erstreckt, der erste Halter ein Führungshalter (22) ist, der dazu verwendet wird, den ersten Abschnitt (21a) verschiebbar an einem Teil der Struktur des Kraftfahrzeugs (1) zu befestigen, der zweite Halter eine Treibhalteranordnung (12) zur Befestigung des Kraftstoff-Einfüllrohrs (21) an einem Teil der Karosseriestruktur des Kraftfahrzeugs (1) an einer Stelle, die sich nach hinten des Führungshalters (22) hin befindet, ist, und der Teil der Karosseriestruktur (7), der sich zwischen dem Führungshalter (22) und der Treibhalteranordnung (12) befindet, dazu ausgeführt ist, sich zu verformen, wenn eine Kraft über einer vorbestimmten Höhe an ein hinteres Ende des Kraftfahrzeugs (1) angelegt wird, wodurch bewirkt wird, dass der erste Teil (21a) des Kraftstoff-Einfüllrohrs (21) durch die Treibhalteranordnung (12) entlang seiner Längsachse nach vorne geschoben wird.

2. Kraftfahrzeug nach Anspruch 1, wobei die Treibhalteranordnung (12) ein äußeres hakenförmiges Glied (13) zum Drücken des ersten Teils (21a) des Kraftstoff-Einfüllrohrs (21) nach vorne und ein inneres Halterglied (14), das an dem äußeren hakenförmigen Glied (13) befestigt ist, um das Kraftstoff-Einfüllrohr (21) im normalen Gebrauch an dem äußeren hakenförmigen Glied (13) zu halten, umfasst.

3. Kraftfahrzeug nach Anspruch 2, wobei das innere Halterglied (14) durch ein Befestigungsmittel (16), das so ausgeführt ist, dass es zerbricht, wenn eine vorbestimmte Kraft daran angelegt wird, an dem äußeren hakenförmigen Glied (13) befestigt ist.

4. Kraftfahrzeug nach einem der Ansprüche 1 bis 3, wobei ein Anschlag (23) an dem ersten Abschnitt (21a) zum Eingriff mit dem Führungshalter (22) zwecks Begrenzung der Vorwärtsbewegung des ersten Abschnitts (21a) vorgesehen ist.

5. Kraftfahrzeug nach Anspruch 4, insofern von Anspruch 2 oder 3 abhängig, wobei eine weitere Verformung der Karosseriestruktur, nachdem der Anschlag (23) am ersten Abschnitt (21a) den Führungshalter (22) berührt hat, bewirkt, dass das Kraftstoff-Einfüllrohr (21) das Befestigungsmittel (16) zerbricht und das äußere Halterglied (13) verformt.

6. Kraftfahrzeug nach Anspruch 6, wobei die Verformung des äußeren Halterglieds (13) eine Begradigung des äußeren Halterglieds (13) bewirkt, wodurch das Kraftstoff-Einfüllrohr (21) freigegeben wird.

7. Kraftfahrzeug nach einem der Ansprüche 1 bis 6, wobei die Kraftstoff-Einfüllstutzenanordnung weiterhin einen oberen Halter (11) zur Befestigung des zweiten Abschnitts (21b) des Kraftstoff-Einfüllrohrs (21) an der Karosseriestruktur des Kraftfahrzeugs an einer Stelle zum oberen Ende hin umfasst.

8. Kraftfahrzeug nach einem der Ansprüche 1 bis 7, wobei der flexible Kraftstoffschlauch (17) einer nicht linearen Bahn zwischen dem Kraftstoffbehälter (25) und dem starren Kraftstoff-Einfüllrohr (21) folgt.

9. Kraftfahrzeug nach einem der Ansprüche 1 bis 8, wobei das Kraftfahrzeug (1) eine Längsachse (Z-Z) aufweist und die Längsachse (Y-Y) des ersten Abschnitts (21a) des Kraftstoff-Einfüllrohrs (21) so angeordnet ist, dass sie parallel zur Längsachse (Z-Z) des Kraftfahrzeugs (1) liegt.

## Revendications

1. Véhicule à moteur (1) ayant une structure de carrosserie et une goulotte de remplissage d'essence fixée à la structure de carrosserie, la goulotte de remplissage d'essence comprenant un tube de remplissage d'essence rigide allongé (21), un tuyau d'essence flexible (17) pour connecter une extrémité inférieure du tube de remplissage d'essence (21) à un réservoir d'essence (25) du véhicule à moteur (1) et des première et deuxième consoles (22, 12) pour attacher le tube de remplissage d'essence (21) à la structure du véhicule à moteur (1), le tube de remplissage d'essence (21) ayant une extrémité supérieure définissant une embouchure dans laquelle de l'essence provenant d'un appareil de distribution d'essence est versée afin de remplir ou de remplir à nouveau le réservoir d'essence avec de l'essence, une première section (21a) s'étendant vers l'arrière depuis l'extrémité inférieure et une deuxième section (21b) s'étendant substantiellement vers le bas depuis l'extrémité supérieure jusqu'à une position où elle rejoint la première section (21a), **caractérisé en ce que** la première section (21a) s'étend vers l'arrière depuis l'extrémité inférieure le long d'un axe longitudinal substantiellement avant-arrière (Y-Y), la première console est une console de guidage (22) utilisée pour attacher par coulissement la première section (21a) à une partie de la structure du véhicule à moteur (1), la deuxième console est un ensemble de console à balayage (12) pour attacher le tube de remplissage d'essence (21) à une partie de la structure de carrosserie du véhicule à moteur (1) en une position située vers l'arrière de la console de guidage (22) et **en ce que** la partie de la structure de carrosserie (7) située entre la console de guidage (22) et l'ensemble de console à balayage (12) est conçue pour se déformer lorsqu'une force au-dessus d'un niveau prédéterminé est appliquée à une extrémité arrière du véhicule à moteur (1), causant ainsi le glissement vers l'avant de la première section (21a) du tube de remplissage d'essence (21) le long de son axe longitudinal par l'ensemble de console à balayage (12).

2. Véhicule à moteur selon la revendication 1, dans lequel l'ensemble de console à balayage (12) comprend un élément en forme de crochet externe (13) pour pousser la première section (21a) du tube de remplissage d'essence (21) dans une direction vers l'avant et un élément de console interne (14) attaché à l'élément en forme de crochet externe (13) pour retenir le tube de remplissage d'essence (21) sur l'élément en forme de crochet externe (13) pendant l'utilisation normale.

3. Véhicule à moteur selon la revendication 2, dans lequel l'élément de console interne (14) est attaché à l'élément en forme de crochet externe (13) par un moyen d'attache (16) conçu pour se casser lorsqu'une force prédéterminée lui est appliquée.

4. Véhicule à moteur selon l'une quelconque des revendications 1 à 3, dans lequel une butée (23) est prévue sur la première section (21a) de manière à s'engager avec la console de guidage (22) pour limiter le déplacement vers l'avant de la première section (21a).

5. Véhicule à moteur selon la revendication 4 lorsqu'elle dépend de la revendication 2 ou de la revendication 3, dans lequel une déformation supplémentaire de la structure de carrosserie, après que la butée (23) sur la première section (21a) est venue en contact avec la console de guidage (22), provoque la rupture du moyen d'attache (16) par le tube de remplissage d'essence (21) et la déformation de l'élément de console externe (13).

6. Véhicule à moteur selon la revendication 6, dans lequel la déformation de l'élément de console externe (13) provoque le redressement de l'élément de console externe (13), libérant ainsi le tube de remplissage d'essence (21).

7. Véhicule à moteur selon l'une quelconque des revendications 1 à 6, dans lequel la goulotte de remplissage d'essence comprend en outre une console supérieure (11) pour attacher la deuxième section (21b) du tube de remplissage d'essence (21) à la structure de carrosserie du véhicule à moteur en une position vers l'extrémité supérieure.

8. Véhicule à moteur selon l'une quelconque des revendications 1 à 7, dans lequel le tuyau d'essence flexible (17) suit une trajectoire non linéaire entre le réservoir d'essence (25) et le tube de remplissage d'essence rigide (21).

9. Véhicule à moteur selon l'une quelconque des revendications 1 à 8, dans lequel le véhicule à moteur (1) a un axe longitudinal (Z-Z) et l'axe longitudinal (Y-Y) de la première section (21a) du tube de remplissage d'essence (21) est agencé de manière à être parallèle à l'axe longitudinal (Z-Z) du véhicule à moteur (1).
